(19) Europäisches Patentamt
European Patent Office
Office européen des brevets

(11) **EP 3 472 676 B1**

(12) **FASCICULE DE BREVET EUROPEEN**

(45) Date de publication et mention
de la délivrance du brevet:
**21.07.2021 Bulletin 2021/29**

(21) Numéro de dépôt: **17736995.6**

(22) Date de dépôt: **16.06.2017**

(51) Int Cl.:
***G05B 19/404*** *(2006.01)*       ***G05B 13/04*** *(2006.01)*
***G01C 25/00*** *(2006.01)*

(86) Numéro de dépôt international:
**PCT/FR2017/051582**

(87) Numéro de publication internationale:
**WO 2017/220900 (28.12.2017 Gazette 2017/52)**

(54) **PROCÉDÉ DE COMPENSATION DES COUPLES DE CORIOLIS, CENTRIFUGES ET DE GRAVITÉ DANS UN SIMULATEUR DE MOUVEMENTS ET SYSTÈME À SIMULATEUR DE MOUVEMENTS**

VERFAHREN ZUM KOMPENSIEREN VON CORIOLIS-, ZENTRIFUGAL- UND GRAVITATIONSDREHMOMENTEN IN EINEM BEWEGUNGSSIMULATOR UND BEWEGUNGSSIMULATORSYSTEM

METHOD FOR COMPENSATING FOR CORIOLIS, CENTRIFUGAL AND GRAVITATIONAL TORQUES IN A MOVEMENT SIMULATOR AND MOVEMENT SIMULATOR SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.06.2016 FR 1655741**

(43) Date de publication de la demande:
**24.04.2019 Bulletin 2019/17**

(73) Titulaire: **iXBlue**
**78100 Saint-Germain-en-Laye (FR)**

(72) Inventeurs:
• **VAU, Bernard**
  **94100 SAINT-MAUR-DES-FOSSES (FR)**
• **BUSSUTIL, Mehdi**
  **94490 Ormesson sur Marne (FR)**

(74) Mandataire: **Jacobacci Coralis Harle**
**32, rue de l'Arcade**
**75008 Paris (FR)**

(56) Documents cités:
**EP-A1- 1 630 070     EP-A1- 2 116 912**
**EP-A2- 1 847 892     EP-A2- 2 571 159**

EP 3 472 676 B1

**Description**

DOMAINE TECHNIQUE AUQUEL SE RAPPORTE L'INVENTION

La présente invention concerne de manière générale le domaine des systèmes de test notamment destinés à des équipements de mesure pouvant être soumis à des mouvements et qui sont testés en étant soumis à des mouvements contrôlés. Elle concerne plus particulièrement un procédé de compensation des couples de Coriolis, centrifuges et de gravité dans un simulateur de mouvement. Un système comportant un simulateur de mouvements adapté à réaliser cette compensation complète l'invention.

ETAT DE L'ART

Les simulateurs de mouvements sont des machines tournantes destinées à tester des équipements comportant en particulier des composants inertiels, par exemple des gyromètres, accéléromètres et centrales inertielles. En fonction des tests à effectuer sur ces composants, l'utilisateur peut avoir recours à des simulateurs constitués de 1, 2, 3 voire 4 articulations imbriquées les unes dans les autres, dans une structure mécanique s'apparentant à celle d'un cardan. Chacune des articulations dudit simulateur possède au moins un actionneur, qui en général est un moteur électrique dont on commande le couple. Ce moteur électrique peut être un moteur à courant continu, un moteur à courant alternatif, avec ou sans balai (brushless). L'actionneur peut parfois être de type hydraulique, la commande se faisant alors par l'intermédiaire d'un fluide dont les paramètres sont contrôlés (notamment la pression, le débit). Les positions angulaires des articulations sont mesurées au moyen de capteurs de position pouvant être en particulier des codeurs incrémentaux. Dans certains cas, des capteurs de vitesse angulaires sont également présents sur ces machines, par exemple avec un tachymètre.

Les positions et/ou vitesses angulaires sont asservies grâce à une loi de commande avec correcteur implémenté dans un calculateur programmable, typiquement un micro-ordinateur et/ou un équipement informatique de traitement de signaux numériques (DSP). A partir des consignes de positions/vitesses fournies par l'utilisateur via un générateur de trajectoire, et à partir des mesures de positions ou vitesses angulaires, la loi de commande fournit une commande, en particulier de couple, qui est appliquée sur l'amplificateur du moteur de chacune des articulations. Les simulateurs de mouvements sont des machines de test, et pour cette raison, leurs axes asservis doivent suivre des consignes de position et de vitesse avec une grande précision.

Si le simulateur de mouvements possède au moins deux articulations, des phénomènes mécaniques d'interaction entre les articulations surviennent. Ces phénomènes sont nommés couplages. Cela signifie que la position/vitesse d'une articulation n'est pas totalement indépendante des positions/vitesses des autres articulations qui provoquent des couples perturbateurs sur ladite articulation. Dans le vocabulaire des automaticiens, un simulateur de mouvements est un système intrinsèquement multivariable. Ces couplages sont aisément modélisables, car ils correspondent à des phénomènes physiques bien connus. Ces couplages sont non-linéaires et résultent des couples de Coriolis, centrifuges, et de gravité.

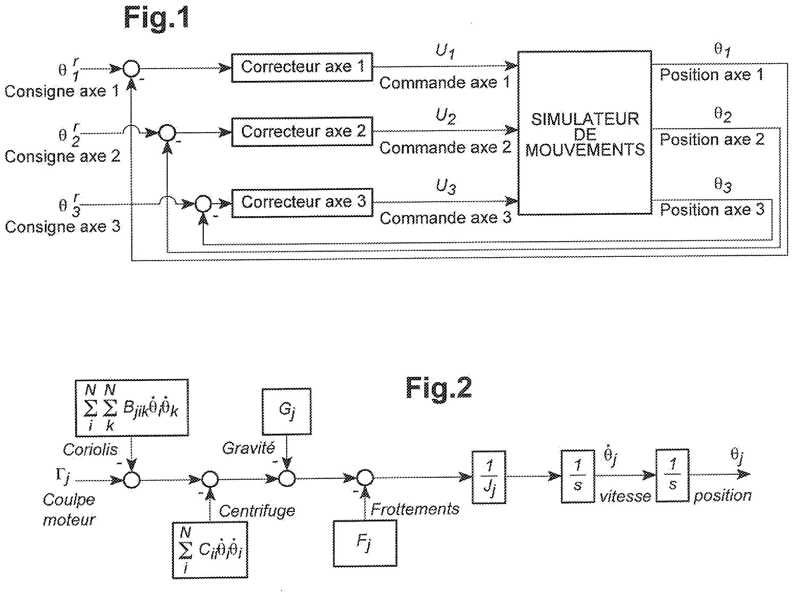

Les simulateurs de mouvements classiques incorporent des lois de commande qui généralement sont dites monovariables : cela signifie que la commande de couple produite par l'asservissement d'une articulation n'est établie qu'à partir de la position ou vitesse de consigne et la position ou vitesse mesurée de ladite articulation. En particulier, les positions et vitesses des autres articulations ne sont pas explicitement prises en compte dans ces lois de commande classiques. La figure 1 de l'état de la technique, qui sera décrite en détail plus loin, et qui représente un simulateur comprenant trois articulations avec sa commande utilisant des correcteurs, schématise cet état de fait.

Aussi, les lois de commande classiques des simulateurs ne compensent-telles les phénomènes non-linéaires de couplage qu'indirectement : les couplages sont perçus par le correcteur comme une perturbation sur le couple de l'articulation et cette perturbation est compensée - plus ou moins bien - par le correcteur, en fonction de sa réponse fréquentielle.

Dans certains modes de fonctionnement particuliers du simulateur de mouvements, en particulier si les vitesses de rotations de plusieurs articulations sont simultanément élevées, plusieurs centaines de °/s (degrés par seconde), les phénomènes de couplages peuvent compromettre gravement les performances en stabilité de vitesse de chacune des articulations du simulateur. Cela, même si les lois de commandes monovariables ont des performances dynamiques optimales.

Compte tenu des fortes exigences en termes de performance et de stabilité de position et vitesse des simulateurs de mouvements, il est donc indispensable de développer des lois de commande qui permettent de prendre en compte explicitement toutes les articulations et leurs couplages.

A cette fin, les lois de commande multivariables sont particulièrement indiquées. Grâce à ce type de loi de commande, la commande en couple d'une articulation issue du correcteur dépend non seulement de la position et/ou vitesse de ladite articulation, mais également des positions et/ou vitesses des autres articulations. Une loi de commande multivariable, par définition, prend en compte de façon explicite ces phénomènes de couplage, afin de les compenser au mieux et d'en atténuer de façon significative les effets néfastes.

On connait par le document EP 2 116 912 A1 un procédé de rejet robuste de perturbations périodiques qui met en œuvre une structure de contrôle faisant intervenir un paramètre de Youla associé à un correcteur central. Il s'agit là d'une structure de type « rétroaction » ou feedback alors que la présente invention met en œuvre une boucle de type « feedforward », la compensation étant opérée à partir de signaux de références externes à la boucle d'asservissement sur laquelle porte la compensation. Un des avantages d'une telle structure est de s'affranchir des contraintes de stabilité relatives à une structure de type feedback. On connait également les documents EP 1 630 070 A1, EP 1 847 892 A2 et EP 2 571 159 A2.

ARRIERE-PLAN TECHNOLOGIQUE

Dans le domaine de la robotique, la question de la compensation des couples de Coriolis, centrifuges et de gravité a été abordée dans un certain nombre de publications.

On peut en particulier mentionner la méthode dite des couples calculés, les méthodes basées sur la théorie de la passivité, ou encore les méthodes basées sur les principes de Lyapounov d'analyse de la stabilité. Cependant, ces méthodes supposent qu'on dispose d'un modèle dynamique complet du robot, par exemple obtenu par identification. Dans les cas où les paramètres dudit modèle ne sont pas connus, on est contraint d'avoir recours à des techniques adaptatives, permettant d'estimer en ligne/temps réel ces paramètres. Les techniques adaptatives les plus classiques sont celles qui reprennent des concepts adaptatifs développés pour les systèmes linéaires (par exemple Horowitz et al. : « Model referenced adaptive control of a two axes direct drive manipulator arm », Proc. IEEE international conférence on robotics and automation, Ralegh, 1987). D'autres méthodes utilisent des principes basés sur la formulation d'un découplage non-linéaire et une commande adaptative linéarisante (J. Craig : « Adaptive control of mechanical manipulators, Proc. IEEE, International conférence on robotics and automation, 1986). On peut encore mentionner des techniques basées sur la formulation d'une commande adaptative basée sur les propriétés de passivité des robots (Slotine et Li : « Applied non linear control, Prentice Hall, 1991).

Toutes ces techniques sont développées dans le cadre général de la robotique, et elles sont donc basées sur les contraintes rencontrées en robotique.

Or dans le domaine des simulateurs de mouvements, les contraintes et spécificités sont différentes, en particulier la possibilité qu'il n'y ait aucune contrainte minimale ou maximale de position angulaire. Cette propriété permet en particulier de maintenir pendant un long intervalle de temps des mouvements axiaux à vitesse constante, et elle est exploitée dans la présente invention. Une autre particularité d'un simulateur de mouvements est qu'il possède de nombreuses symétries et qu'en règle générale, les multiples axes de rotation sont concourants, ce qui simplifie le modèle et permet, la plupart du temps, de considérer la matrice d'inertie du modèle dynamique comme constante ou quasi constante.

OBJET DE L'INVENTION

Afin de remédier à l'inconvénient précité de l'état de la technique, la présente invention propose un procédé de compensation de couples perturbateurs pour un simulateur de mouvements, ledit simulateur comportant des articulations commandées par des organes effecteurs selon des axes j en fonction de consignes $\theta^r_j$ de mouvements sur les axes, chaque organe effecteur d'un axe donné spécifique de l'organe effecteur recevant une commande $U_j$ et un capteur de l'axe mesurant $\theta_j$ l'action de l'organe effecteur selon ledit axe j, le simulateur étant dans un système comportant pour chaque axe une loi de commande avec un bloc correcteur monovariable dans une boucle de rétroaction, ledit bloc correcteur monovariable de fonction de transfert $Corr(q^{-1})$ recevant en entrée un signal d'écart entre la consigne $\theta^r_j$ et la mesure $\theta_j$ pour l'axe correspondant et produisant en sortie la commande $U_j$.

Selon l'invention, les couples perturbateurs sont des couples de Coriolis, centrifuges et de gravité et on met en œuvre pour chaque axe, une loi de commande comportant, en outre du bloc correcteur monovariable par axe, une loi de compensation non-linéaire et multivariable combinée aux correcteurs monovariables, la loi de compensation calculant en fonction de la commande $U_j$ une estimation $\hat{P}_j(t)$ des couples perturbateurs, ladite estimation $\hat{P}_j(t)$ étant injectée à la commande $U_j$ envoyée à l'organe effecteur pour compenser les couples perturbateurs, et l'estimation $\hat{P}_j(t)$ des couples perturbateurs est calculée à partir de la valeur d'un signal d'erreur $\varepsilon_j(t)$ qui est une version filtrée de la commande $U_j$ par un filtre de transmittance $H(q^{-1})$ destiné à éliminer au moins la composante continue de la commande et on modélise préalablement le simulateur de mouvement afin d'obtenir un modèle dynamique exprimant les couples de façon affine par rapport à un ensemble de paramètres de base $\chi$ suivant une relation matricielle du type :

$$\Phi_j^T(\theta, \dot{\theta}, \ddot{\theta})\chi_j \text{ ,}$$ l'indice j correspondant aux différents axes, on détermine suite à la modélisation préalable du simu-

lateur un sous-ensemble $\alpha_j$ des paramètres de base correspondant à des couples perturbateurs ayant un niveau supérieur à un seuil de perturbation déterminé, l'estimation $\hat{P}_j(t)$ des couples perturbateurs étant calculée par :

$$\hat{P}_j(t) = \phi_j^T(\theta, \dot{\theta})\hat{\alpha}_j,$$

et on calcule en ligne les estimations du sous-ensemble des paramètres de base par une équation itérative :

$$\hat{\alpha}_j(t+1) = \hat{\alpha}_j(t) + \mu_j \phi_{Fj}^T(t)\varepsilon_j(t)$$

avec

$$\phi_{Fj}(t) = H(q^{-1})T(q^{-1})\phi_j(t)$$

les éléments des vecteurs $\phi_j^T(t)$ étant filtrés par $H_j.Corr_j.G_j/(1+C_j.H_j)$ pour obtenir le vecteur $\phi_{Fj}^T(t)$,

T étant défini par la relation $(1 + Corr(q^{-1})L(q^{-1})) \cdot T(q^{-1}) = Corr(q^{-1})L(q^{-1})$ avec $L_j(q^{-1})$ la transmittance discrète de la transformée du produit $\dfrac{1}{J_j}\dfrac{1}{S}$ dans le cas d'un système échantillonné où $J_j$ sont les inerties et $\mu_j$ est une matrice carrée définie réelle positive servant de paramètre de réglage de la vitesse de convergence de l'estimation.

D'autres caractéristiques non limitatives et avantageuses du procédé conforme à l'invention, prises individuellement ou selon toutes les combinaisons techniquement possibles, sont les suivantes :

- lors du calcul de l'estimation $\hat{P}_j(t)$ des couples perturbateurs, on néglige les effets de la variation de la matrice d'inertie,
- le filtre de transmittance $H(q^{-1})$ destiné à éliminer la composante continue de la commande est un filtre passe haut,
- le filtre de transmittance $H(q^{-1})$ destiné à éliminer la composante continue de la commande est un filtre passe bande,
- on met en œuvre une compensation adaptative en temps réel dans laquelle les estimations du sous-ensemble des paramètres de base sont calculées préalablement et stockées dans des tables, et dans lequel :

  - dans une phase préalable :

    - pour chaque effet non linéaire de chaque axe, on choisit un mouvement sensibilisant sur un ou plusieurs autres axes à vitesse constante conduisant à une perturbation significative sur le couple dudit axe,
    - on calcule des estimations du sous-ensemble des paramètres de base par l'équation itérative $$\hat{\alpha}_j(t+1) = \hat{\alpha}_j(t) + \mu_j \phi_{Fj}^T(t)\varepsilon_j(t)$$ jusqu'à convergence,

  - dans une phase de mise en œuvre en temps réel, on utilise directement les tables de paramètres de base pour calculer l'estimation $\hat{P}_j(t)$ des couples perturbateurs par : $$\hat{P}_j(t) = \phi_j^T(\theta, \dot{\theta})\hat{\alpha}_j,$$

- la convergence correspond à ce que la valeur du signal d'erreur $\varepsilon_j(t)$ tend vers zéro,
- on met en œuvre un algorithme du gradient récursif,
- le simulateur de mouvement est utilisé à vitesse constante ou à faible taux de variation de vitesse dans la phase d'estimation des estimées $\hat{\alpha}_j(t)$,
- on met en œuvre un simulateur de mouvement à au moins deux axes commandés et comportant pour chaque axe une loi de commande avec un bloc correcteur monovariable dans une boucle de rétroaction, ledit correcteur recevant en entrée un signal d'écart entre la consigne $\theta_j$ et la mesure $\theta_j$ pour l'axe correspondant et produisant en sortie la commande $U_j$ destinée à un organe effecteur, et on rajoute entre la sortie du bloc correcteur et l'organe effecteur un module matériel de calcul de loi de compensation et de compensation de la commande, ledit module étant soit un programme informatique chargé sur un support et destiné à compléter un programme informatique du bloc correcteur monovariable, soit un équipement électronique et programmable de capture de la commande en sortie du bloc correcteur et de restitution au moteur d'une commande compensée par la loi de compensation,
- on utilise un modèle d'articulation dans lequel les inerties des différentes articulations sont indépendantes les unes des autres, les tenseurs d'inertie des articulations du simulateur de mouvement étant une matrice diagonale,

L'invention concerne également un système à simulateur de mouvements comportant un simulateur de mouvements et des moyens de compensation de couples perturbateurs, ledit simulateur comportant des articulations commandées par des organes effecteurs selon des axes *j* en fonction de consignes $\theta_j$ de mouvements sur les axes, chaque organe effecteur d'un axe donné spécifique de l'organe effecteur recevant une commande $U_j$ et un capteur de l'axe mesurant $\theta_j$ l'action de l'organe effecteur selon ledit axe *j*, le système comportant pour chaque axe une loi de commande avec un bloc correcteur monovariable dans une boucle de rétroaction, ledit bloc correcteur recevant en entrée un signal d'écart entre la consigne $\theta_j$ et la mesure $\theta_j$ pour l'axe correspondant et produisant en sortie la commande $U_j$, et dans lequel système, les moyens de compensation de couples perturbateurs sont un calculateur programmable spécialement configuré pour exécuter le procédé de l'invention.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente un simulateur de mouvements commandé de l'état de la technique avec pour chaque axe commandé sa propre loi de commande monovariable avec correcteur et à boucle de rétroaction,
- la figure 2 représente un bloc diagramme simplifié du modèle dynamique d'une articulation prenant en compte, outre les frottements, les effets des couples de Coriolis, centrifuge et de gravité (parfois nommé balourd)
- la figure 3 représente un bloc diagramme simplifié d'une application du modèle dynamique de la figure 2 à une loi de commande monovariable avec correcteur et à boucle de rétroaction, dans le cas d'un asservissement en position,
- la figure 4 représente un bloc diagramme simplifié du type de l'application de la figure 3 mais cette fois dans le cas d'un asservissement en vitesse, l'intégration finale de la vitesse pour obtenir la position pouvant alors être omise,
- la figure 5 représente un bloc diagramme simplifié du type de l'application de la figure 3 mais avec une réorganisation des blocs pour isoler les effets des couples de Coriolis, centrifuge et de gravité,
- la figure 6 représente un bloc diagramme simplifié sur la base de celui de la figure 5 avec introduction d'une loi de compensation des effets des couples de Coriolis, centrifuge et de gravité par injection dans la boucle d'une estimation de ces derniers effets à partir d'un signal d'erreur obtenu à partir du signal de couple moteur produit par le correcteur, et
- les figures 7 et 8 représentent deux blocs diagrammes simplifiés sur la base de celui de la figure 6 dans deux modes d'application de l'invention, un second mode, (Fig.7) adaptatif, pour des vitesses constantes avec calculs en ligne/temps réel d'un sous-ensemble vectoriel de paramètres de base pertinents et un premier mode, (Fig.8) non adaptatif, avec utilisation du sous-ensemble vectoriel de paramètres de base pertinents calculés dans le second mode et alors mémorisés.

En relation avec la figure 1 de l'état de la technique, on va commencer par décrire l'état de la technique afin de faciliter la présentation ultérieure de l'invention à partir d'éléments connus. Sur cette figure 1, un simulateur de commande comportant trois articulations, qu'on assimilera par la suite à des axes, est commandé en fonction de consignes individuelles sur chacun des axes.

Un axe correspond à un effecteur/moteur et à un capteur et dans le cas où une articulation du simulateur correspond à un effecteur/moteur et à un capteur, on peut assimiler l'articulation à un axe. Dans le cas où l'articulation est complexe, par exemple avec plusieurs effecteurs et/ou plusieurs capteurs, on pourra la ramener à un ensemble d'axes qu'on pourra traiter comme décrit. Il en est de même dans le cas d'une articulation avec un effecteur/moteur et plusieurs capteurs ou plusieurs moteurs et un seul capteur.

Un bloc correcteur monovariable est mis en œuvre sur chaque axe avec une boucle de rétroaction et mesure de la position angulaire sur l'axe correspondant. Dans cette description, le terme « correcteur » couvre un bloc correcteur monovariable tel qu'utilisé classiquement, c'est-à-dire sans prise en compte des interactions entre les axes, sans compensation des couples de Coriolis, centrifuges et de gravité.

Sur la figure 1, les variables: $\theta_1$, $\theta_2$, $\theta_3$ correspondant aux positions angulaires des axes, $\theta_1^r, \theta_2^r, \theta_3^r$ sont les consignes des positions angulaires desdits axes et $U_1$, $U_2$, $U_3$ sont les commandes issues des correcteurs monovariables et attaquant les amplificateurs de puissance des moteurs du simulateur. Un correcteur est mis en œuvre par axe commandé.

Les correcteurs peuvent posséder, comme sur la figure, un degré de liberté, et être par exemple de type PID, ou encore 2 degrés de liberté, par exemple RST, LQG, commande prédictive, H-infini... Ces correcteurs sont essentiellement linéaires. Les consignes $\theta_1^r, \theta_2^r, \theta_3^r$ sont fournies par un générateur de consignes qui lui-même agit en fonction des ordres fournis par l'utilisateur du simulateur de mouvements.

Par ailleurs, en lui-même, un simulateur de mouvements est modélisable au moyen des outils traditionnels de la robotique. On peut en particulier, afin de déterminer le modèle dynamique du simulateur de mouvements, utiliser les équations d'Euler-Lagrange :

$$\frac{d}{dt}\left(\frac{\partial L(\theta,\dot{\theta})}{\partial \dot{\theta}}\right) - \frac{\partial L(\theta,\dot{\theta})}{\partial \theta} = \Gamma \qquad (1)$$

Avec :

$\theta$ : vecteur des positions angulaires de chaque axe,
$\dot{\theta}$ : vecteur des vitesses angulaires de chaque axe,
$\Gamma$ : vecteur des couples produits par les moteurs de chaque axe, et où $L(\theta, \dot{\theta})$ est le Lagrangien du système qui est par définition :

$$L(\theta,\dot{\theta}) = E_c(\theta,\dot{\theta}) - E_p(\theta) \qquad (2)$$

où :
$E_c(\theta, \ddot{\theta})$ est l'énergie cinétique totale du simulateur,
$E_p(\theta)$ son énergie potentielle.

L'équation fondamentale de la dynamique des systèmes robotiques s'écrit alors :

$$A(\theta)\ddot{\theta} + M(\theta,\dot{\theta})\dot{\theta} + G(\theta) + F(\dot{\theta}) = \Gamma \qquad (3)$$

Avec :

$\ddot{\theta}$ vecteur des accélérations angulaires de chaque axe,
$A(\theta)$ : est une matrice carrée qui est nommée matrice d'inertie,
$M(\theta,\dot{\theta})$: est la matrice carrée des couples centrifuges et Coriolis,
$G(\theta)$ : est le vecteur des couples de gravité,
$F(\theta)$ : est le vecteur des couples de frottements.

$A(\theta)$, $M(\theta,\dot{\theta})$, $G(\theta)$ dépendent de la géométrie du simulateur de mouvements et en particulier des tenseurs d'inertie de chacune des articulations, des positions des centres de masse par rapport aux axes de rotation, etc... Le modèle dynamique du robot peut être obtenu en employant diverses conventions utilisées en robotique, en particulier la convention de Denavit-Hartenberg ou, encore, la convention de Denavit-Hartenberg modifiée (décrite dans l'article : « A new géométrie notation for open and closed-loop robots », in IEEE international conférence on robotics and automation, San francisco, April 1986).
En particulier, en utilisant la convention de Denavit-Hartenberg modifiée, on montre qu'on obtient un modèle dynamique linéaire par rapport à un ensemble de paramètres $\chi$, dits paramètres de base, suivant une relation matricielle du type :

$$\Gamma = \Phi^T(\theta,\dot{\theta},\ddot{\theta})\chi \qquad (4)$$

Dans la matrice $\Phi$, les termes dépendant de $\ddot{\theta}$ sont forcément reliés aux coefficients de la matrice d'inertie.
Ainsi, le couple $\Gamma_j$ de l'articulation $j$ pour $1 \leq j \leq N$ où $N$ est le nombre d'articulations peut être réécrit :

$$\Gamma_j = A_{1j}\ddot{\theta}_1 + A_{2j}\ddot{\theta}_2 + A_{3j}\ddot{\theta}_3 + \sum_i^N \sum_k^N B_{jik}\dot{\theta}_i\dot{\theta}_k + \sum_i^N C_{ji}\dot{\theta}_i^2 + G_j + F_j \qquad (5)$$

où les $A_{1j}$, $B_{jik}$, $C_{ji}$, $G_j$ dépendent des positions angulaires des axes (c'est-à-dire du vecteur $\theta$) et des paramètres de base (c'est-à-dire de $\chi$). Alors que $F_j$ dépend des vitesses angulaires des axes (c'est-à-dire du vecteur $\dot{\theta}$).
Le couple de frottement $F_j$ est décomposable entre un couple de frottements secs qui est considéré en première approximation, proportionnel au signe de $\dot{\theta}_j$, et un couple de frottement visqueux qui est considéré en première approxi-

mation, proportionnel à $\dot{\theta}_j$. Sous ces conditions de première approximation, on remarque qu'à vitesse constante d'une articulation, et donc sans accélération, le couple de frottement est constant et qu'il peut donc être éliminé par un filtrage passe haut ou à tout le moins éliminant les composantes continues.

Dans le cadre de la procédure de réglage de la loi de compensation des couples de Coriolis, centrifuges et de gravité, on fait les approximations suivantes :

> 1) que la matrice d'inertie du simulateur de mouvements a des termes indépendants du vecteur $\theta$ qui est le vecteur des positions angulaires.
> 2) que la matrice d'inertie du simulateur de mouvements est diagonale.

La première approximation est assez bien justifiée en général, compte tenu de la géométrie des simulateurs de mouvements. La seconde se justifie par le fait que les tests réalisés dans le cadre du réglage de la loi de compensation se font à vitesse constante et donc à accélération nulle, comme on le verra plus loin lors de la mise en œuvre de la loi de commande multivariable de l'invention.

Ces deux approximations reviennent à dire qu'on a pour la matrice d'inertie :

$$A \approx \begin{bmatrix} J_1 & 0 & 0 \\ 0 & J_2 & 0 \\ 0 & 0 & J_3 \end{bmatrix} \tag{6}$$

Sous ces conditions d'approximation, il est possible de déterminer, pour chaque articulation du simulateur, un bloc diagramme décrivant le modèle dynamique du système et qui est schématisé sur la figure 2.

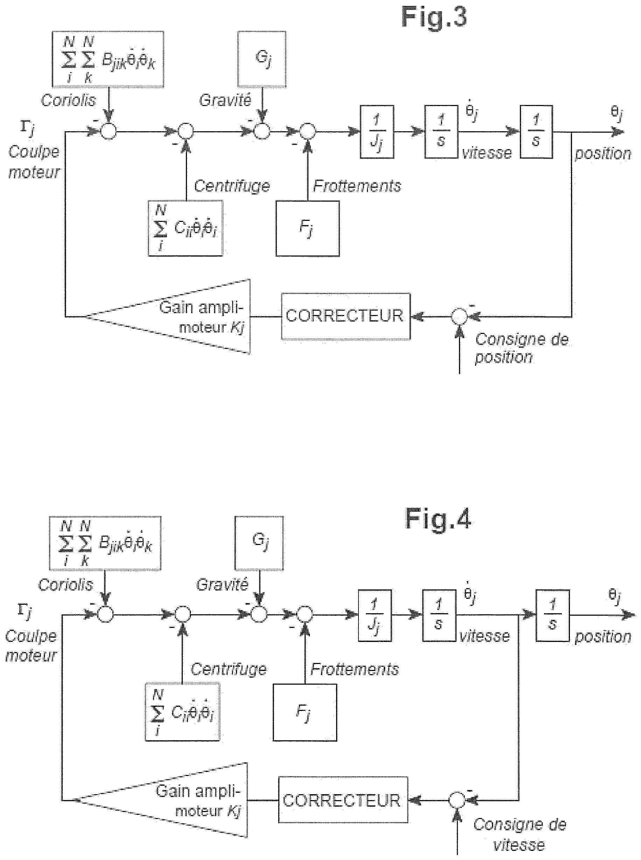

Dans le cadre de l'application d'une loi de commande classique, c'est-à-dire monovariable, on peut utiliser un modèle dynamique linéarisé simplifié (c'est-à-dire qui ignore les effets Coriolis, centrifuges de gravités, et les frottements secs) du système développé ci-dessus. La loi de commande classique monovariable avec correcteur obtenue est schématisée pour respectivement un asservissement en position et en vitesse sur les figures 3 et 4.

Le rôle du correcteur est d'assurer le suivi de consigne de position ou de vitesse et donc de compenser les couples perturbateurs. Suivant la dynamique de ce correcteur, les couples perturbateurs sont plus ou moins bien compensés. En particulier, plus la dynamique du correcteur est élevée et mieux le rejet de la perturbation est assuré, et moins l'effet de la perturbation se manifeste sur la variable asservie, que ce soit la vitesse ou la position.

Cependant, dans bien des cas, même si le correcteur est réglé de façon optimale afin d'avoir une dynamique importante, ces perturbations sont trop imparfaitement compensées du fait qu'on met en œuvre des correcteurs monovariables et donc que les interactions/couplages entre articulations/axes ne sont pas prises en compte globalement.

C'est donc pour cela qu'il est proposé avec la présente invention un moyen assurant une compensation plus efficace des perturbations non-linéaires, en particulier des couples de Coriolis, centrifuges, et de gravité, que celle que peuvent fournir les correcteurs classiques monovariables seuls vus précédemment, et de façon à minimiser l'impact desdites perturbations sur les grandeurs asservies.

On va donc maintenant décrire la loi de compensation proposée qui est non-linéaire et multivariable ainsi que sa méthode de réglage.

Tout d'abord, on suppose connus les inerties $J_j$ ainsi que les gains d'amplificateur $K_{aj}$, et les constantes de couple $K_{mj}$ des moteurs. En d'autres termes, on connaît directement ou indirectement le rapport $\dfrac{K_{aj}K_{mj}}{J_j}$.

Le terme « gains d'amplificateur » doit ici être entendu au sens large et comme pouvant inclure des gains d'éventuels convertisseurs numériques-analogiques, convertisseurs analogiques-numériques et de réducteurs ou autres élément de la boucle.

On pose $K_j$ le gain global entre la commande issue de la loi de commande et le couple produit par le ou les moteurs de l'axe j.

De même, on suppose connues les fonctions de transfert $Corr_j(q^{-1})$ de chaque correcteur monovariable.

Pour cela, on aura identifié le modèle dynamique linéarisé du système formé par le simulateur et réglé la loi de commande monovariable, c'est-à-dire le correcteur, telle que présentée précédemment afin de récupérer ces données. Les constantes de couple moteur sont des données des constructeurs des moteurs. Les gains d'amplificateur sont des données mesurables ou calculables selon les cas. Les inerties sont obtenues par identification et sur cette question, on peut se référer à l'ouvrage de L.Ljung « identification, Theory for the user », Prentice Hall

Dans une variante de mise en œuvre, on peut faire des estimations ou hypothèses sur le modèle et notamment sur les inerties, voir les calculer à partir d'une analyse d'une représentation informatique modélisée du simulateur.

La loi de commande à compensation multivariable et correcteur monovariable proposée peut être déclinée en deux modes d'application de la loi de compensation :

- un premier mode pour compensation non adaptative des couples perturbateurs en utilisant des paramètres prédéterminés préalablement, et
- un second mode pour estimation et compensation en ligne/temps réel des paramètres nécessaires à l'application du premier mode.

Le second mode d'estimation en ligne, qu'on peut qualifier d'adaptatif, est utilisé dans une phase de réglage de la loi de compensation permettant de déterminer les paramètres utiles au premier mode. Dans une phase d'application fonctionnelle à des tests, on utilise de préférence le premier mode de compensation des couples perturbateurs en utilisant les paramètres prédéterminés précédemment avec le second mode.

On va dans, un premier temps, décrire le second mode d'estimation des paramètres utiles à la loi de compensation.

Dans la phase de réglage, la loi adaptative est basée sur le fait que si un axe j tourne à vitesse constante et si on considère que le couple de frottements secs est constant sur 360°, et dans l'hypothèse où il n'y a ni couples de Coriolis, centrifuge ou de gravité qui sont donc nuls, alors la sortie du correcteur $U_j(t)$ est constante. Inversement, toujours à vitesse constante, mais dans l'hypothèse de la présence de couples de Coriolis, centrifuges, et de gravité, alors la commande $U_j(t)$ n'est plus constante du fait de la contre-réaction qu'entraîne la présence de la boucle. Comme on le verra, un filtrage permet de séparer les éléments non constants de ceux qui le sont.

On va maintenant utiliser une représentation du système bouclé qui permet d'isoler les effets des couples de Coriolis, centrifuges et de gravité par rapport aux autres effets mentionnés précédemment.

Posons $P_j(t)$ comme étant égal à la somme des couples de Coriolis, centrifuges et de gravité agissant sur l'axe j, le tout multiplié par l'inverse du gain de l'amplificateur $K_{aj}$ et par l'inverse de la constante de couple du moteur $K_{mj}$, soit :

$$P_j(t) = \frac{1}{K_j}\left(\sum_i^N \sum_k^N B_{jik}\,\dot{\theta}_i\,\dot{\theta}_k + \sum_i^N C_{ji}\,\dot{\theta}_i^2 + G_j(\theta_j)\right) \qquad (7)$$

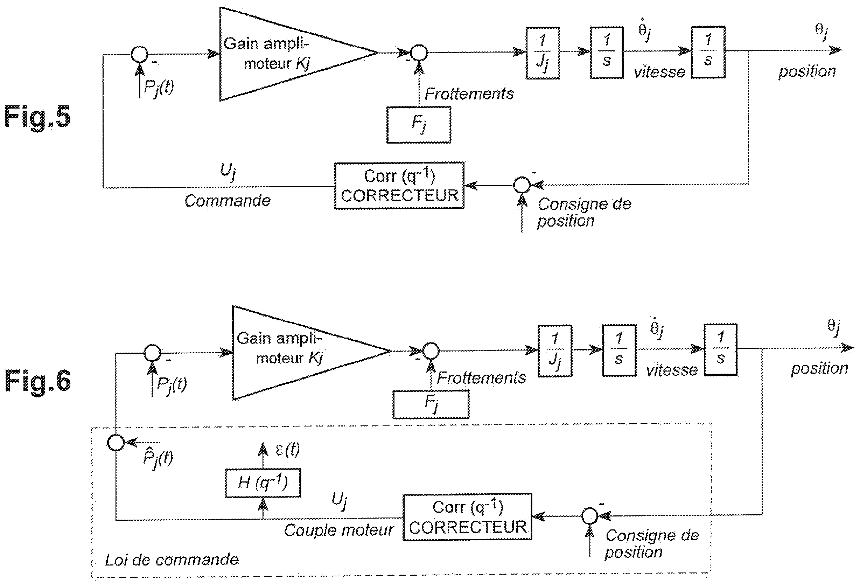

Avec ces conventions, un schéma simplifié de la boucle de contrôle propre à une articulation peut être modélisée suivant le schéma de la figure 5 dans le cas d'un asservissement en position.

Pour obtenir une compensation des effets des couples de Coriolis, centrifuges, et de gravité, il suffit alors d'injecter une compensation $\hat{P}_j(t)$, qui est une estimation de $P_j(t)$, en sortie du correcteur suivant le schéma de la figure 6.

La loi de compensation adaptative du second mode s'utilise lorsque la consigne de vitesse est constante. Cette loi consiste à minimiser le carré ou, dans une variante la somme des carrés, d'un signal d'erreur $\varepsilon_j(t)$, correspondant à la commande $U_j(t)$ passée par un filtre passe-haut destiné à éliminer la composante continue de $U_j(t)$ et dont la transmittance discrète est notée $H(q^{-1})$, où $q^{-1}$ est l'opérateur retard dans ce système échantillonné.

Posons $L_j(z)$ la transformée en z du système $\frac{1}{J_j S}$ muni d'un échantillonneur bloqueur, et $L_j(q^{-1})$ la transmittance discrète associée.

Compte tenu de la représentation de la figure 6, on a :

$$\varepsilon_j(t) = H(q^{-1})\frac{Corr_j(q^{-1})L_j(q^{-1})}{1+Corr_j(q^{-1})L_j(q^{-1})} \cdot \left(P_j(t) - \hat{P}_j(t)\right) \qquad (8)$$

Mais compte tenu de la relation (4) qui exprime les couples perturbateurs de façon affine par rapport aux paramètres de bases, on peut déduire les relations (9), (10), (11) où les composantes des vecteurs $\alpha_j$ forment un sousensemble de $\chi$ tel qu'il est défini par la relation (4). En d'autres termes, on gardera les composantes de $\alpha_j$ qui sont les éléments de $\chi$ qui ont un impact sur les couples de Coriolis, centrifuges, et de gravité de l'axe $j$ :

$$P_1(t) = \phi_1^T(\theta,\dot{\theta})\alpha_1 \qquad (9)$$

$$P_2(t) = \phi_2^T(\theta,\dot{\theta})\alpha_2 \qquad (10)$$

$$P_3(t) = \phi_3^T(\theta, \dot{\theta})\alpha_3 \qquad\qquad (11)$$

Il y a donc une relation générique du type (12):

$$P_j(t) = \phi_j^T(\theta, \dot{\theta})\alpha_j \qquad\qquad (12)$$

Ce sous-ensemble comporte donc les composantes des $\alpha_j$ les plus significatives, c'est-à-dire les paramètres de base pour lesquels les couples perturbateurs associés sont les plus élevés, en pratique supérieurs à un seuil qu'on aura déterminé. On comprend donc qu'en fonction du seuil et donc du niveau de significativité choisi, la compensation sera plus ou moins précise. Par exemple, à partir d'une modélisation théorique on déterminera préalablement les paramètres de base qui produisent le couple perturbateur le plus élevé

La dépendance de $\phi_j$ en $\dot{\theta}$ est omise compte tenu du fait que la loi adaptative est destinée à fonctionner à des vitesses constantes ou quasiconstantes, correspondant à des accélérations nulles ou quasi-nulles.

En effet, le simulateur de mouvement est ici utilisé à vitesse de mouvement constante et s'il y a variation de vitesse, celle-ci doit être la plus faible possible, par exemple inférieure à 1 %.

Soit $\hat{\alpha}_j(t)$ l'estimée de $\alpha_j$. L'estimée de $P_j(t)$, notée $\hat{P}_j(t)$ s'écrit :

$$\hat{P}_j(t) = \phi_j^T(\theta, \dot{\theta})\hat{\alpha}_j \qquad\qquad (13)$$

Ainsi le signal $\varepsilon(t)$ peut s'exprimer suivant :

$$\varepsilon_j(t) = H(q^{-1})\frac{Corr_j(q^{-1})L_j(q^{-1})}{1+Corr_j(q^{-1})L_j(q^{-1})} \cdot \left(\alpha_j^T(t) - \hat{\alpha}_j^T(t)\right)\phi_j(t) \qquad(14)$$

La relation précédente (14) conduit à proposer la formule d'estimation suivante :

$$\hat{\alpha}_j(t + 1) = \hat{\alpha}_j(t) + \mu_j\phi_j^T(t)\varepsilon_j(t) \qquad\qquad (15)$$

où $\mu_j$ est une matrice carrée définie réelle positive, qui sert de paramètre de réglage de la vitesse de convergence de l'estimation. Cette formule résulte de l'application de l'algorithme du gradient récursif.

Selon la théorie de la passivité, une condition suffisante de convergence de la formule de convergence (15) est donnée par la condition suivante :

$$\mathcal{R}e\left(H(z)\frac{C(z)L(z)}{1+C(z)L(z)}\right) > 0 \qquad \forall z \qquad\qquad (16)$$

Cette condition de convergence peut parfois se révéler contraignante, aussi est-il préférable de s'en affranchir par un filtrage approprié de $\phi_j(t)$. Ce filtrage consiste à filtrer les composantes de la matrice $\phi_j^T(t)$ par $H_jCorr_jG_j/(1+C_jH_j)$ pour obtenir la matrice $\phi_{Fj}(t)$.

Définissons $T(q^{-1})$ tel que :

$$(1 + Corr(q^{-1})L(q^{-1})) \cdot T(q^{-1}) = Corr(q^{-1})L(q^{-1}) \qquad\qquad (17)$$

On propose finalement la loi de compensation :

$$\hat{\alpha}_j(t + 1) = \hat{\alpha}_j(t) + \mu_j\phi_{Fj}^T(t)\varepsilon_j(t) \qquad\qquad (18)$$

$$\text{Avec} \quad \phi_{Fj}(t) = H(q^{-1})T(q^{-1})\phi_j(t) \qquad (19)$$

Si le vecteur $\phi_{Fj}(t)$ est décorrélé du bruit de la boucle *j*, alors l'estimation du vecteur $\hat{\alpha}_j$ est non biaisée.

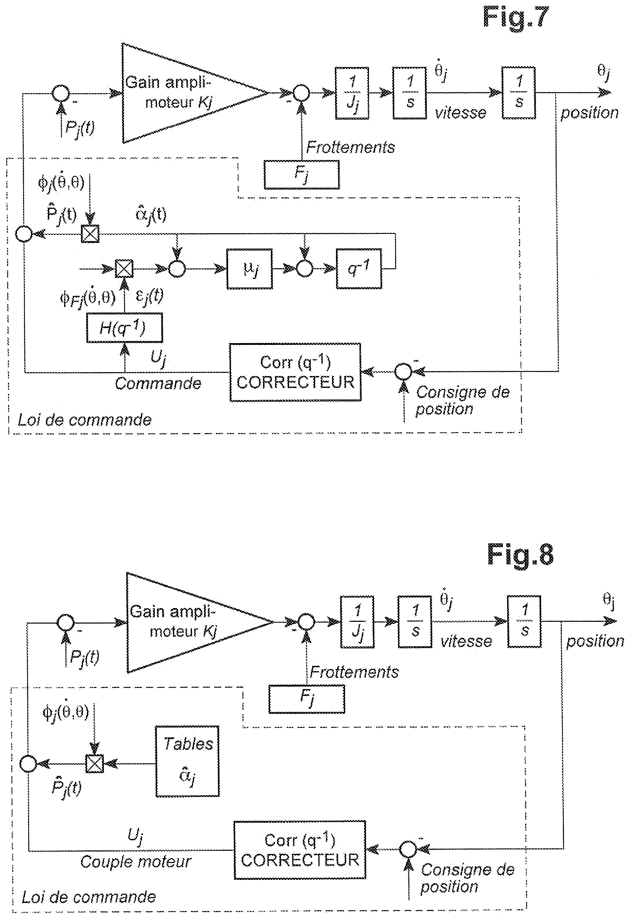

La figure 7 représente l'ensemble de la loi de commande mettant en œuvre cette loi de compensation avec d'estimation en ligne des $\hat{\alpha}_j$ et qui correspond au second mode d'estimation en ligne qui permet de calculer les paramètres utiles à la compensation.

Dans ce second mode, la loi de commande de la figure 7 peut être utilisée en tant que telle pour obtenir la compensation lors de l'utilisation du simulateur de mouvements pour effectuer des tests sur des équipements de mesure.

Toutefois, la compensation n'est efficace/obtenue que pour des mouvements à vitesse constante et lorsqu'on modifie une ou des vitesses de mouvement dans le simulateur, il peut se produire des transitoires nuisibles à la compensation, mais aussi à la qualité de l'estimation.

En conséquence, il est préféré le premier mode représenté sur la figure 8 pour la compensation lors des tests sur simulateur de mouvements, correspondant à une phase d'utilisation fonctionnelle du simulateur de mouvements et qui utilise les résultats de la loi de commande de la figure 7, les résultats (paramètres de base) étant stockés pour une utilisation ultérieure avec la loi de commande correspondant à la figure 8.

Pour pouvoir pleinement utiliser ce premier mode de la figure 8, la démarche suivante qui passe par le second mode est utilisée :

- pour chaque effet non linéaire de chaque axe, on choisit un mouvement sensibilisant à vitesse constante conduisant à une perturbation significative sur un ou plusieurs autres axes. On répète donc ce processus pour traiter tous les axes.

- on applique la loi adaptative du second mode, c'est-à-dire selon la loi de commande de la figure 7 jusqu'à la convergence, c'est-à-dire que le signal ε(t) tend vers 0 et donc que les paramètres de base deviennent constants à la précision souhaitée.

- après convergence, les paramètres de base estimés $\hat{\alpha}(t)$ deviennent/sont constants et on les mémorise dans des tables. Les tables sont donc constituées des paramètres de base estimés â, une table pour chaque axe, le nombre de paramètres à stocker n'excédant pas une dizaine pour chaque axe.

- une fois les tables obtenues, on peut utiliser la loi de commande du premier mode de compensation telle que représentée figure 8, c'est-à-dire qu'on réutilise les valeurs de â mémorisées dans les tables dans une loi du type :

$$\hat{P}_j(t) = \phi_j^T(\theta, \dot{\theta})\hat{\alpha}_j$$

Il devient ainsi possible dans le premier mode d'utiliser la compensation pour des mouvements autres que des mouvements à vitesse constante.

L'invention a été appliquée à un simulateur de mouvement de la société IXBLUE, une machine Evo-30 en l'espèce, à trois axes commandés et il a été possible d'obtenir des atténuations des perturbations de couplage de 17 dB et 22 dB selon les axes et le type de perturbation, Coriolis, centrifuges, et/ou de gravité.

## Revendications

1. Procédé de compensation de couples perturbateurs pour un simulateur de mouvements, ledit simulateur comportant des articulations commandées par des organes effecteurs selon des axes *j* en fonction de consignes $\theta_j^c$ de mouvements sur les axes, chaque organe effecteur d'un axe donné spécifique de l'organe effecteur recevant une commande $U_j$ et un capteur de l'axe mesurant $\theta_j$ l'action de l'organe effecteur selon ledit axe j, le simulateur étant dans un système comportant pour chaque axe une loi de commande avec un bloc correcteur monovariable dans une boucle de rétroaction, ledit bloc correcteur monovariable de fonction de transfert *Corr(q⁻¹)* recevant en entrée un signal d'écart entre la consigne $\theta_j^c$ et la mesure $\theta_j$ pour l'axe correspondant et produisant en sortie la commande $U_j$, dans lequel les couples perturbateurs sont des couples de Coriolis, centrifuges et de gravité, c aractérisé en ce qu'on met en œuvre pour chaque axe, une loi de commande comportant, en outre du bloc correcteur monovariable par axe, une loi de compensation non-linéaire et multivariable combinée aux correcteurs monovariables, la loi de compensation calculant en fonction de la commande $U_j$ une estimation $\hat{P}_j(t)$ des couples perturbateurs, ladite estimation $\hat{P}_j(t)$ étant injectée à la commande $U_j$ envoyée à l'organe effecteur pour compenser les couples perturbateurs, et

en ce que l'estimation $\hat{P}_j(t)$ des couples perturbateurs est calculée à partir de la valeur d'un signal d'erreur $\varepsilon_j(t)$ qui est une version filtrée de la commande $U_j$ par un filtre de transmittance $H(q^{-1})$ destiné à éliminer au moins la composante continue de la commande et qu'on modélise préalablement le simulateur de mouvement afin d'obtenir un modèle dynamique exprimant les couples de façon affine par rapport à un ensemble de paramètres de base $\chi$

suivant une relation matricielle du type : $\Phi_j^T(\theta, \dot{\theta}, \ddot{\theta})\chi_j$ , l'indice j correspondant aux différents axes, qu'on détermine suite à la modélisation préalable du simulateur un sous-ensemble $\alpha_j$ des paramètres de base correspondant à des couples perturbateurs ayant un niveau supérieur à un seuil de perturbation déterminé, l'estimation $\hat{P}_j(t)$ des

couples perturbateurs étant calculée par : $\hat{P}_j(t) = \phi_j^T(\theta, \dot{\theta})\hat{\alpha}_j$, et

en ce qu'on calcule en ligne les estimations du sous-ensemble des paramètres de base par une équation itérative :

$$\hat{\alpha}_j(t+1) = \hat{\alpha}_j(t) + \mu_j \phi_{Fj}^T(t)\varepsilon_j(t)$$

avec

$$\phi_{Fj}(t) = H(q^{-1})T(q^{-1})\phi_j(t)$$

les éléments des vecteurs $\phi_j^T(t)$ étant filtrés par $H_j Corr_j G_j/(1+C_j H_j)$ pour obtenir le vecteur $\phi_{Fj}^T(t)$,
T étant défini par la relation $(1 + Corr(q^{-1})L(q^{-1})) \cdot T(q^{-1}) = Corr(q^{-1})L(q^{-1})$ avec $L_j(q^{-1})$ la transmittance discrète de la transformée du produit $\dfrac{1}{J_j}\dfrac{1}{S}$ dans le cas d'un système échantillonné où $J_j$ sont les inerties et $\mu_j$ est une matrice carrée définie réelle positive servant de paramètre de réglage de la vitesse de convergence de l'estimation.

2. Procédé selon la revendication 1, **caractérisé en ce que** lors du calcul de l'estimation $\hat{P}_j(t)$ des couples perturbateurs, on néglige les effets de la variation de la matrice d'inertie.

3. Procédé selon la revendication 1 ou la revendication 2, **caractérisé en ce que** le filtre de transmittance $H(q^{-1})$ destiné à éliminer la composante continue de la commande est un filtre passe haut.

4. Procédé selon l'une quelconque des revendications précédentes, **caractérisé en ce qu'**on met en œuvre une compensation adaptative en temps réel dans laquelle les estimations du sous-ensemble des paramètres de base sont calculées préalablement et stockées dans des tables, dans lequel procédé,

   - dans une phase préalable :

     - pour chaque effet non linéaire de chaque axe, on choisit un mouvement sensibilisant sur un ou plusieurs autres axes à vitesse constante conduisant à une perturbation significative sur le couple dudit axe,
     - on calcule des estimations du sous-ensemble des paramètres de base par l'équation itérative $\hat{\alpha}_j(t+1) = \hat{\alpha}_j(t) + \mu_j \phi_{Fj}^T(t)\varepsilon_j(t)$ jusqu'à convergence,

     - dans une phase de mise en œuvre en temps réel, on utilise directement les tables de paramètres de base pour calculer l'estimation $\hat{P}_j(t)$ des couples perturbateurs par : $\hat{P}_j(t) = \phi_j^T(\theta, \dot{\theta})\hat{\alpha}_j$.

5. Procédé selon la revendication 4, **caractérisé en ce que** la convergence correspond à ce que la valeur du signal d'erreur $\varepsilon_j(t)$ tend vers zéro.

6. Procédé selon l'une quelconque des revendications précédentes, **caractérisé en ce qu'**on met en œuvre un algorithme du gradient récursif.

**7.** Procédé selon l'une quelconque des revendications précédentes, **caractérisé en ce que** le simulateur de mouvement est utilisé à vitesse constante ou à faible taux de variation de vitesse dans la phase d'estimation des estimées $\hat{\alpha_j}(t)$.

**8.** Procédé selon l'une quelconque des revendications précédentes, **caractérisé en ce qu'**on met en œuvre un simulateur de mouvement à au moins deux axes commandés et comportant pour chaque axe une loi de commande avec un bloc correcteur monovariable dans une boucle de rétroaction, ledit correcteur recevant en entrée un signal d'écart entre la consigne $\theta^r_j$ et la mesure $\theta_j$ pour l'axe correspondant et produisant en sortie la commande $U_j$ destinée à un organe effecteur, et **en ce qu'**on rajoute entre la sortie du bloc correcteur et l'organe effecteur un module matériel de calcul de loi de compensation et de compensation de la commande, ledit module étant soit un programme informatique chargé sur un support et destiné à compléter un programme informatique du bloc correcteur monovariable, soit un équipement électronique et programmable de capture de la commande en sortie du bloc correcteur et de restitution au moteur d'une commande compensée par la loi de compensation.

**9.** Procédé selon l'une quelconque des revendications précédentes, **caractérisé en ce qu'**on utilise un modèle d'articulation dans lequel les inerties des différentes articulations sont indépendantes les unes des autres, les tenseurs d'inertie des articulations du simulateur de mouvement étant une matrice diagonale.

**10.** Système à simulateur de mouvements comportant un simulateur de mouvements et des moyens de compensation de couples perturbateurs, ledit simulateur comportant des articulations commandées par des organes effecteurs selon des axes $j$ en fonction de consignes $\theta^r_j$ de mouvements sur les axes, chaque organe effecteur d'un axe donné spécifique de l'organe effecteur recevant une commande $U_j$ et un capteur de l'axe mesurant $\theta_j$ l'action de l'organe effecteur selon ledit axe $j$, le système comportant pour chaque axe une loi de commande avec un bloc correcteur monovariable dans une boucle de rétroaction, ledit bloc correcteur recevant en entrée un signal d'écart entre la consigne $\theta^r_j$ et la mesure $\theta_j$ pour l'axe correspondant et produisant en sortie la commande $U_j$, **caractérisé en ce que** les moyens de compensation de couples perturbateurs sont un calculateur programmable spécialement configuré pour exécuter le procédé de l'une quelconque des revendications précédentes.

## Patentansprüche

**1.** Verfahren zum Kompensieren von Drehmomenten, die für einen Bewegungssimulator störend wirken, wobei der Bewegungssimulator Gelenke aufweist, die durch Betätigungsorgane in Bezug auf Achsen $j$ in Abhängigkeit von Weisungen $\theta^r_j$ für Bewegungen auf den Achsen gesteuert werden, wobei jedes Betätigungsorgan einer gegebenen spezifischen Achse des Betätigungsorgans einen Befehl $U_j$ erhält und ein Sensor der Achse die Aktion $\theta_j$ des Betätigungsorgans in Bezug auf die Achse $j$ mißt, wobei der Simulator in einem System ist, das für jede Achse ein Steuerungsgesetz mit einem monovariablen Korrekturblock in einer Rückkopplungsschleife aufweist, wobei der monovariable Korrekturblock mit der Übertragungsfunktion $Corr(q^{-1})$ am Eingang ein Signal bezüglich der Abweichung zwischen der Weisung $\theta^r_j$ und der Messung $\theta_j$ für die entsprechende Achse erhält und am Ausgang den Befehl $U_j$ erzeugt,

wobei die störenden Drehmomente Coriolis-, Zentrifugal- und Gravitationsdrehmomente sind,
**dadurch gekennzeichnet, daß** für jede Achse ein Steuerungsgesetz ausgeführt wird, das außer dem monovariablen Korrekturblock je Achse ein nichtlineares und multivariables, mit den monovariablen Korrektoren kombiniertes Kompensationsgesetz aufweist, wobei das Kompensationsgesetz in Abhängigkeit vom Befehl $U_j$ einen Schätzwert $\hat{P}_j(t)$ der störenden Drehmomente errechnet, wobei der Schätzwert $\hat{P}_j(t)$ in den dem Betätigungsorgan übermittelten Befehl $Uj$ eingebracht wird, um die störenden Drehmomente zu kompensieren, und
daß der Schätzwert $\hat{P}_j(t)$ der störenden Drehmomente vom Wert eines Fehlersignals $\varepsilon_j(t)$ ausgehend berechnet wird, das eine Version des Befehls $Uj$ ist, die durch einen Übertragungsfilter $H(q^{-1})$ gefiltert wird, der dazu bestimmt ist, wenigstens die Gleichspannungskomponente des Befehls auszuschalten, und daß zuvor der Bewegungssimulator modelliert wird, um ein dynamisches Modell zu erhalten, das die Drehmomente in verfeinerter Form in Bezug auf eine Gesamtheit von Basisparametern $\chi$ entsprechend der Matrixbeziehung vom Typ $\Phi_j^T(\theta, \dot{\theta}, \ddot{\theta})\chi_j$ ausdrückt, wobei der Index j den verschiedenen Achsen entspricht, daß nach der vorangehenden Modellierung des Simulators eine Untergesamtheit $\alpha_j$ der Basisparameter bestimmt wird, die den störenden Drehmomenten entspricht, die ein höheres Niveau als eine bestimmte Störschwelle aufweisen, wobei der Schätzwert $\hat{P}_j(t)$ der störenden Drehmomente durch $\hat{P}_j(t) = \phi_j^T(\theta, \dot{\theta})\hat{\alpha}_j$ errechnet wird, und

daß laufend die Schätzwerte der Untergesamtheiten der Basisparameter durch eine iterative Gleichung

$$\hat{\alpha}_j(t+1) = \hat{\alpha}_j(t) + \mu_j \phi_{Fj}^T(t)\varepsilon_j(t)$$

mit $\phi_{Fj}(t)$ = H(q$^{-1}$)T(q$^{-1}$)$\phi_j(t)$ errechnet werden,

wobei die Elemente der Vektoren $\phi_j^T(t)$ durch $H_j.Corr_j.G_j/(1+C_j.H_j)$ gefiltert werden, um den Vektor $\phi_{Fj}^T(t)$ zu erhalten,

wobei T durch die Beziehung $(1 + Corr(q^{-1})L(q^{-1})) \cdot T(q^{-1}) = Corr(q^{-1})L(q^{-1})$ mit $L_j(q^{-1})$ als der diskreten Übertragung der Transformierten des Produkts $\dfrac{1}{J_j}\dfrac{1}{S}J_j$ für den Fall eines abgetasteten Systems definiert ist, bei dem $J_j$ die Trägheiten sind und $\mu_j$ eine reell positiv definierte quadratische Matrix ist, die als Regelungsparameter der Konvergenzgeschwindigkeit des Schätzwerts dient.

2. Verfahren gemäß Anspruch 1, **dadurch gekennzeichnet, daß** bei der Berechnung des Schätzwerts $\hat{P}_j(t)$ der störenden Drehmomente die Wirkungen der Variation der Trägheitsmatrix vernachlässigt werden.

3. Verfahren gemäß Anspruch 1 oder Anspruch 2, **dadurch gekennzeichnet, daß** der Übertragungsfilter $H(q^{-1})$, der dazu bestimmt ist, die Gleichspannungskomponente des Befehls auszuschalten, ein Hochpaßfilter ist.

4. Verfahren gemäß einem der vorangehenden Ansprüche, **dadurch gekennzeichnet, daß** eine adaptive Kompensation in Echtzeit durchgeführt wird, bei der die Schätzwerte der Untergesamtheit der Basisparameter vorher berechnet und in Tabellen gespeichert werden, wobei in dem Verfahren

   - in einer vorausgehenden Phase

      - für jede nicht lineare Wirkung jeder Achse eine sensibilisierende Bewegung auf einer oder mehreren anderen Achsen bei konstanter Geschwindigkeit ausgewählt wird, die zu einer bedeutsamen Störung des Drehmoments der besagten Achse führt,
      - die Schätzwerte der Untergesamtheit der Basisparameter durch die iterative Gleichung $\hat{\alpha}_j(t+1) = \hat{\alpha}_j(t) + \mu_j \phi_{Fj}^T(t)\varepsilon_j(t)$ bis zur Konvergenz berechnet werden,

   - in einer Phase der Durchführung in Echtzeit die Tabellen der Basisparameter direkt verwendet werden, um die Schätzwerte $\hat{P}_j(t)$ der störenden Drehmomente durch $\hat{P}_j(t) = \phi_j^T(\theta, \dot{\theta})\hat{\alpha}_j$ $\hat{P}_j(t)$ zu berechnen.

5. Verfahren gemäß Anspruch 4, **dadurch gekennzeichnet, daß** die Konvergenz dem entspricht, daß der Wert des Fehlersignals $\varepsilon_j(t)$ gegen Null strebt.

6. Verfahren gemäß einem der vorangehenden Ansprüche, **dadurch gekennzeichnet, daß** ein Algorithmus des rekursiven Gradienten angewendet wird.

7. Verfahren gemäß einem der vorangehenden Ansprüche, **dadurch gekennzeichnet, daß** der Bewegungssimulator bei konstanter Geschwindigkeit oder bei einer geringen Änderungsrate der Geschwindigkeit in der Phase der Schätzung der Schätzwerte $\hat{\alpha}_j(t)$ verwendet wird.

8. Verfahren gemäß gemäß einem der vorangehenden Ansprüche, **dadurch gekennzeichnet, daß** ein Bewegungssimulator mit wenigstens zwei gesteuerten Achsen verwendet wird, der für jede Achse ein Steuerungsgesetz mit einem monovariablen Korrekturblock in einer Rückkopplungsschleife aufweist, wobei der Korrektor am Eingang ein Signal bezüglich der Abweichung zwischen der Weisung $\theta_j$ und der Messung $\theta_j$ für die entsprechende Achse erhält und am Ausgang den für ein Betätigungsorgan bestimmten Befehl $U_j$ erzeugt, und daß zwischen dem Ausgang des Korrekturblocks und dem Betätigungsorgan ein materielles Modul zum Berechnen des Kompensationsgesetzes und der Kompensation des Befehls hinzugefügt wird, wobei das Modul entweder ein auf einen Träger geladenes und zum Vervollständigen eines Informatikprogramms des monovariablen Korrekturblocks bestimmtes Informatikprogramm oder eine elektronische programmierbare Ausrüstung zum Erfassen des Befehls am Ausgang des Korrekturblocks und zur Rückgabe eines durch das Kompensationsgesetz kompensierten Befehls an den Motor ist.

9. Verfahren gemäß einem der vorangehenden Ansprüche, **dadurch gekennzeichnet, daß** ein Gelenkmodell verwendet wird, bei dem die Trägheiten der verschiedenen Gelenke voneinander unabhängig sind, wobei die Trägheitsstraffer der Gelenke des Bewegungssimulators eine diagonale Matrix sind.

10. Bewegungssimulatorsystem mit einem Bewegungssimulator und Mitteln zum Kompensieren störender Drehmomente, wobei der Simulator Gelenke aufweist, die durch Betätigungsorgane in Bezug auf Achsen $j$ in Abhängigkeit von Weisungen $\theta'_j$ für Bewegungen auf den Achsen gesteuert werden, wobei jedes Betätigungsorgan einer gegebenen spezifischen Achse des Betätigungsorgans einen Befehl $U_j$ erhält und ein Sensor der Achse die Aktion $\theta_j$ des Betätigungsorgans in Bezug auf die Achse $j$ mißt, wobei das System für jede Achse ein Steuerungsgesetz mit einem monovariablen Korrekturblock in einer Rückkopplungsschleife aufweist, wobei der Korrekturblock am Eingang ein Signal bezüglich der Abweichung zwischen der Weisung $\theta'_j$ und der Messung $\theta_j$ für die entsprechende Achse erhält und am Ausgang den Befehl $U_j$ erzeugt, **dadurch gekennzeichnet, daß** die Mittel zum Kompensieren störender Drehmomente ein programmierbarer Rechner sind, der speziell dazu ausgelegt ist, das Verfahren nach einem der vorangehenden Ansprüche durchzuführen.

**Claims**

1. A method for compensating for disturbing torques for a movement simulator, said simulator including joints controlled by effector members about axes $j$ as a function of movement set points $\theta'_j$ on the axes, each effector member of a specific given axis of the effector member receiving a command $U_j$ and a sensor for the axis measuring $\theta_j$, the action of the effector member about said axis j, the simulator being in a system including, for each axis, a control law with a monovariable corrector block in a feedback loop, said monovariable corrector block of transfer function $Corr(q^{-1})$ receiving as an input a signal of difference between the set point $\theta'_j$ and the measurement $\theta_j$ for the corresponding axis and producing as an output the command $U_j$, in which the disturbing torques are Coriolis, centrifugal and gravitational torques,

**characterized in that**, for each axis, a control law is implemented, which includes, in addition to the monovariable corrector block per axis, a non-linear and multivariable compensation law combined to the monovariable correctors, the compensation law calculating, as a function of the command $U_j$, an estimation $\hat{P}_j(t)$ of the disturbing torques, said estimation $\hat{P}_j(t)$ being injected into the command $U_j$ sent to the effector member, to compensate for the disturbing torques, and

**in that** the estimation $\hat{P}_j(t)$ of the disturbing torques being calculated based on the value of an error signal $\varepsilon_j(t)$, which is a version of the command $U_j$ filtered by a transmittance filter $H(q^{-1})$ intended to eliminate at least the direct component from the command, and the movement simulator is previously modelled in order to obtain a dynamic model affinely expressing the torques with respect to a set of base parameters $\chi$ according to a matrix relation of

the type: $\Phi_j^T(\theta, \dot{\theta}, \ddot{\theta})\chi_j$, the index j corresponding to the different axes, a sub-set $\alpha_j$ of the base parameters corresponding to disturbing torques having a level higher than a determined disturbance threshold is determined, following to the previous modelling of the simulator, the estimation $\hat{P}_j(t)$ of the disturbing torques being calculated by: $\hat{P}_j(t) = \phi_j^T(\theta, \dot{\theta})\hat{\alpha}_j$, and

**in that** the estimations of the sub-sets of base parameters are calculated in line by an iterative equation:

$$\hat{\alpha}_j(t+1) = \hat{\alpha}_j(t) + \mu_j \phi_{Fj}^T(t)\varepsilon_j(t)$$

with

$$\phi_{Fj}(t) = H(q^{-1})\underline{T}(q^{-1})\phi_j(t)$$

the vector elements $\phi_j^T(t)$ being filtered by $H_j\,Corr_j\,G_j\,/\,(1+C_j\,H_j)$ to obtain the vector $\phi_{Fj}^T(t)$,

T being defined by the relation $(1 + Corr(q^{-1})L(q^{-1})) \cdot T(q^{-1}) = Corr(q^{-1})L(q^{-1})$, with $L_j(q^{-1})$ the discrete transmittance

of the transform of the product $\dfrac{1}{J_j}\dfrac{1}{S}\,J_j$ in the case of a sampled system where $J_j$ are the inertias and $\mu_j$ is a defined positive real square matrix serving as an adjustment parameter for the speed of convergence of the estimation.

2. The method according to claim 1, **characterized in that**, during the calculation of the estimation $\hat{P}_j(t)$ of the disturbing torques, the effects of the variation of the inertia matrix are neglected.

3. The method according to claim 1 or claim 2, **characterized in that** the transmittance filter $H(q^{-1})$ intended to eliminate the direct component from the command is a high-pass filter.

4. The method according to any one of previous claims, **characterized in that** a real-time adaptive compensation is implemented, in which the estimations of the sub-set of base parameters are previously calculated and stored in tables, wherein:

    - in a preliminary phase:

        - for each non-linear effect of each axis, a sensitizing movement is chosen on one or several other constant-speed axes, leading to a significant disturbance in the torque of said axis,
        - estimations of the sub-set of base parameters are calculated by the iterative equation

$$\hat{\alpha}_j(t+1) = \hat{\alpha}_j(t) + \mu_j\phi_{Fj}^T(t)\varepsilon_j(t)$$ until there is convergence,

    - in a real-time implementation phase, the base parameter tables are directly used to calculate the estimation

    $\hat{P}_j(t)$ of the disturbing torques by: $\hat{P}_j(t) = \phi_j^T(\theta,\dot{\theta})\hat{\alpha}_j.$

5. The method according to claim 4, **characterized in that** the convergence corresponds to the fact that the value of the error signal $\varepsilon_j(t)$ tends to zero.

6. The method according to any one of previous claims, **characterized in that** a recursive gradient algorithm is implemented.

7. The method according to any one of previous claims, **characterized in that** the movement simulator is used at constant speed or low speed-variation rate in the phase of estimation of the estimates $\hat{\alpha}_j(t)$.

8. The method according to any one of previous claims, **characterized in that** a movement simulator is implemented, which has at least two controlled axes and which includes for each axis a control law with a monovariable corrector block in a feedback loop, said corrector receiving as an input a signal of difference between the setpoint $\theta_j$ and the measurement $\theta_j$ for the corresponding axis and producing as an output the command $U_j$ intended to an effector member, and **in that**, between the output of the corrector block and the effector member, a hardware module is added, for calculating the compensation law and compensating the command, said module being either a computer program loaded on a support and intended to complete an computer program of the monovariable corrector block, or an electronic and programmable device for capturing the command at the exit of the corrector block and sending to the motor a command compensated by the compensation law.

9. The method according to any one of previous claims, **characterized in that** a joint model is used, in which the inertias of the different joints are independent relative to each other, the inertia tensors of the joints of the movement simulator being a diagonal matrix.

10. A system with a movement simulator including a movement simulator and means for compensating for disturbing torques, said simulator including joints controlled by effector members about axes $j$ as a function of movement set points $\theta_j$ on the axes, each effector member of a specific given axis of the effector member receiving a command *Uj* and a sensor for the axis measuring $\theta_j$, the action of the effector member about said axis *j*, the system including, for each axis, a control law with a monovariable corrector block in a feedback loop, said corrector block receiving as an input a signal of difference between the set point $\theta_j$ and the measurement $\theta_j$ for the corresponding axis and producing as an output the command $U_j$, **characterized in that** the means for compensating for the disturbing torques are a programmable calculator specifically configured to execute the method according to any one of previous claims.

**Fig.1**

Consigne axe 1 $\theta^r_1$
Consigne axe 2 $\theta^r_2$
Consigne axe 3 $\theta^r_3$

Correcteur axe 1
Correcteur axe 2
Correcteur axe 3

$U_1$ Commande axe 1
$U_2$ Commande axe 2
$U_3$ Commande axe 3

SIMULATEUR DE MOUVEMENTS

Position axe 1 $\theta_1$
Position axe 2 $\theta_2$
Position axe 3 $\theta_3$

**Fig.2**

Coriolis $\sum\limits_{i}^{N}\sum\limits_{k}^{N} B_{jik}\dot{\theta}_i\dot{\theta}_k$

$\Gamma_j$ Coulpe moteur

Gravité $G_j$

Centrifuge $\sum\limits_{i}^{N} C_{ii}\dot{\theta}_i\dot{\theta}_i$

Frottements $F_j$

$\dfrac{1}{J_j}$

$\dfrac{1}{s}$ $\dot{\theta}_j$ vitesse

$\dfrac{1}{s}$ $\theta_j$ position

## Fig.3

## Fig.4

Fig.5

Fig.6

Fig.7

Fig.8

# EP 3 472 676 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 2116912 A1
- EP 1630070 A1
- EP 1847892 A2
- EP 2571159 A2

### Littérature non-brevet citée dans la description

- **HOROWITZ et al.** Model referenced adaptive control of a two axes direct drive manipulator arm. *Proc. IEEE international conférence on robotics and automation,* 1987
- **J. CRAIG.** Adaptive control of mechanical manipulators. *Proc. IEEE, International conférence on robotics and automation,* 1986
- **SLOTINE.** Applied non linear control. Prentice Hall, 1991
- A new géométrie notation for open and closed-loop robots. *IEEE international conférence on robotics and automation,* Avril 1986
- **L.LJUNG.** identification, Theory for the user. Prentice Hall